**Europäisches Patentamt**

**European Patent Office**

**Office européen des brevets**

(19)

(11) Veröffentlichungsnummer: **0 175 872**
**B1**

(12) # EUROPÄISCHE PATENTSCHRIFT

(45) Veröffentlichungstag der Patentschrift:
**16.12.87**

(21) Anmeldenummer: **85109084.5**

(22) Anmeldetag: **20.07.85**

(51) Int. Cl.⁴: **C 22 C 9/04,** C 22 F 1/08,
F 16 D 23/04

(54) **Messinglegierung, Herstellungsverfahren und Verwendung.**

(30) Priorität: **27.07.84 DE 3427740**

(43) Veröffentlichungstag der Anmeldung:
**02.04.86 Patentblatt 86/14**

(45) Bekanntmachung des Hinweises auf die Patenterteilung:
**16.12.87 Patentblatt 87/51**

(84) Benannte Vertragsstaaten:
**AT BE CH DE FR GB IT LI NL SE**

(56) Entgegenhaltungen:
**DE-A-2 145 690**
**DE-A-2 145 710**
**DE-C-919 738**
**FR-A-2 411 895**
**GB-A-362 877**
**GB-A-2 049 727**

(73) Patentinhaber: **DIEHL GMBH & CO.,**
**Stephanstrasse 49, D-8500 Nürnberg (DE)**

(72) Erfinder: **Ruchel, Peter, Dr., Kattowitzerstrasse 15,**
**D-8560 Lauf (DE)**
Erfinder: **Hofmann, Lothar, Flutgrabenweg 14,**
**D-8430 Neumarkt (DE)**

(74) Vertreter: **Hofmann, Gerhard, Dipl.- Ing.,**
**Stephanstrasse 49, D-8500 Nürnberg (DE)**

EP 0 175 872 B1

# 0 175 872

**Beschreibung**

Die vorliegende Erfindung betrifft eine Messinglegierung, ein Verfahren zur Herstellung eines Messingwerkstoffes oder -halbzeuges aus einer derartigen Messinglegierung, sowie die Verwendung des Messingwerkstoffes, bzw. der Messinglegierung für Halbzeuge und Halbfabrikate, die neben guter Bearbeitbarkeit einen hohen Verschleißwiderstand aufweisen müssen, insbesondere für Synchronringe.

Für Synchronringe werden unterschiedliche Werkstoffe, wie Sondermessinge und Aluminiumlegierungen, aber auch Verbundwerkstoffe, wie mit Hartmetallen beschichtete Sondermessinge und ähnliches verwendet. Dabei sind letztere in ihrer Anwendung aus Kostengründen auf Sonderfälle beschränkt, während sich bei Sondermessingen, bzw. Aluminiumlegierungen infolge ständig steigender Anforderungen insbesondere im Automobilbau, zunehmend Probleme bezüglich des Verschleißverhaltens ergeben.

Aufgabe der vorliegenden Erfindung ist es daher, eine Messinglegierung, bzw. einen Messingwerkstoff aufzuzeigen, welcher den steigenden Anforderungen bezüglich des Verschleißverhaltens genügt.

Zur Lösung dieser Aufgabe wird erfindungsgemäß eine Messinglegierung der folgenden Zusammensetzung vorgeschlagen (in Gew.-%):

| | | |
|---|---|---|
| 10 | bis 35 | % Zink, |
| 4 | bis 12 | % Mangan, |
| 2 | bis 7 | % Aluminium, |
| 1,1 | bis 4 | % Silizium, |
| 0,01 | bis 0,15 | % Chrom und/oder Zirkon, |

mit der Maßgabe, deß das Silizium im wesentlichen in Form von Mangansilizid abgebunden ist, sowie

| | | |
|---|---|---|
| wahlweise bis zu | 2 | % Blei, |
| bis zu | 2 | % Nickel, |
| bis zu | 1 | % übliche Verunreinigungen, |

wobei der Anteil an Eisen-Verunreinigung 0,7 % nicht übersteigen darf,

|  |  |
|---|---|
| Rest | Kupfer. |

Eine derartige Legierung hat insbesondere den Vorteil, daß sie trotz der erzielbaren technischen Eigenschaften aus relativ billigen Komponenten hergestellt werden kann. Insbesondere sind Legierungsbestandteile, welche im allgemeinen nur in Form von besonders kostspieligen Vorlegierungen eingeschmolzen werden können, wie z. B. Eisen, nicht notwendig, bzw. nur in geringen Mengen als Verunreinigung vorhanden.

Legierungen auf der Basis von Cu-Zn-Al der obengenannten Zusammensetzung sind aus legierungstechnischer Sicht den Sondermessingen zuzuordnen. Derartige Legierungen werden verbreitet für verschleißbeständige Teile, z. B. Synchronringe eingesetzt.

So ist es aus der DE-OS 29 19 478 der Anmelderin eine Messinglegierung zur Verwendung für Synchronringe bekannt, welche die folgende Zusammensetzung aufweist:

| | | | |
|---|---|---|---|
| 60 | bis | 75 | % Kupfer, |
| 6 | bis | 8 | % Mangan, |
| 4 | bis | 6 | % Aluminium, |
| 1 | bis | 4 | % Silizium, |
| 1 | bis | 3 | % Eisen, |
| 0,5 | bis | 1,5 | % Blei, |
| wahlweise | bis zu | 0,2 | % Nickel, |
| | bis zu | 0,2 | % Zinn, |
| | bis zu | 0,05 | % eines oder mehrere der |

Elemente Chrom, Venadium, Titan,

|  |  |
|---|---|
| Rest | Zink. |

Die hierbei erreichte relativ hohe Verschleißbeständigkeit wird auf die aus Eisen, Mangen und Silizium gebildeten intermetallischen Verbindungen zurückgeführt. Die Zugeben von Chrom, Vanadium und Titan sollen dabei neben Eisen zu einer Kornfeinung des Gefüges beitragen. Bei dieser Legierung treten insbesondere auch durch den relativ hohe Eisengehalt von 1,6 Gew.-%. im bevorzugten Ausführungsbeispiel höhere Kosten auf, da dieser einerseits nur mittels teuerer Vorlegierung eingebracht werden kann, und andererseits für die Ausbildung des besonders feinkörnigen Gefüges wesentlich ist.

Weiterhin ist aus der DE-PS 21 45 690 eine bei hoher Temperatur verschleißfeste Messinglegierung entnehmbar, welche als Ventilsitzmaterial für Verbrennungsmotoren eingesetzt werden kann. Derartige Teile müssen zwar ähnliche Eigenschaften wie Synchronringe aufweisen, insbesondere auch einen möglichst gleichmäßigen Reibungsbeiwert, welcher jedoch bei Ventilsitzen möglichst niedrig sein muß, während der Reibungsbeiwert bei Synchronringen möglichst hoch sein soll. Diese Messinglegierung weist die folgende Zusammensetzung auf:

2

| | | | |
|---|---|---|---|
| 25 | bis | 40 % | Zink, |
| 1 | bis | 8 % | Aluminium, |
| 1 | bis | 5 % | Mangan, |
| 0,8 | bis | 3 % | Chrom, |
| 0,3 | bis | 2 % | Silizium, |
| 0,3 | bis | 1 % | Phosphor, |
| wahlweise | bis zu | 2 % | Eisen und/oder Nickel und |

weitere Wahlkomponenten, wobei die Wahlkomponenten insgesamt 5 % Anteil nicht übersteigen dürfen,

Rest    Kupfer.

Dabei sollen Aluminium und Chrom die Kristallmatrix verstärken und zur Verbesserung der Verschleißbeständigkeit beitragen, Silizium bildet zusammen mit Mangan eine harte intermetallische Verbindung, welche ebenfalls zur Erhöhung der Verschleißbeständigkeit beiträgt. Phosphor dient als Desoxidator und soll ebenfalls die Härte des Werkstoffes erhöhen.

Bei derartigen Cu-Zn-Al-Basis-Legierungen liegt durch die Einlagerung von Aluminium in die Kupfer-Zink-Matrix (durch Verspannung des Originalgitters) eine Mischkristallhärtung vor. Ihre Verschleißbeständigkeit erhalten diese Legierungen durch intermetallische Verbindungen (Silizide), insbesondere der Metalle Eisen und Mangan mit Silizium. Die Verschleißbeständigkeit steigt dabei innerhalb eines bestimmten Bereiches mit dem Mangananteil der Silizide an. Die allgemeinen Bestrebungen gehen nun dahin, den Mengenanteil an Siliziden und damit die Verschleißbeständigkeit zu erhöhen.

Mit steigenden Mengenanteil an Siliziden steigt aber auch die Gefahr der Bildung sehr grober Silizidausscheidungen, sowie der Koagulation der Silizide zu Haufen oder massiven Komplexen. Beide Vorgänge verstärken die Gefahr des Sprödbruchs bei Teilen aus derartigen Legierungen. Sprödbruch ist aber bei derartigen Teilen, wie z. B. Synchronringen, extrem unerwünscht, da dabei erhebliche Folgeschäden auftreten können.

Außerdem stehen derartigen Silizidanreicherungen automatisch an Siliziden verarmte Regionen gegenüber, die in jedem Fall eine ungenügende Verschleißbestandigkeit damit behafteter Teile zur Folge haben.

Der Siliziumgehalt der einschlägigen Knetlegierungen ist deshalb nach DIN 17 660, CuZn40Al 1 und 2 auf Gehalte bis maximal 1 Gew.-% begrenzt. Siliziumgehalte bis max. 2 Gew.-% stellen bei derartigen Legierungen eher eine Ausnahme dar. So sind die in verschiedenen Patentansprüchen genannten höheren Siliziumgehalte bei derartigen Legierungen kaum realisierbar, wie auch den jeweiligen Ausführungsbeispielen entnehmbar ist So ist in der DE-OS 29 19 478 im Anspruchsbegehren ein Siliziumgehalt bis 4 Gew.-% entnehmbar. Das bevorzugte Ausführungsbeispiel nennt dagegen einen Siliziumgehalt von 1,5 Gew.-%. Tatsächlich ist diese Legierung mit einem Siliziumgehalt von maximal etwa 1,7 Gew.-% vorzugsweise dem angegebenen Zweck entsprechend einsetzbar. Auch in der DE-PS 21 45 690 werden bis zu 2 % Silizium beansprucht, während die Ausführungsbeispiele einen Siliziumgehalt von maximal 0,8% aufweisen.

Von einem Legierungshersteller wurden für derartige Legierungen maximale Siliziumgehalte von 1,53 %o erprobt (Automobiltechnische Zeitschrift 83 (1981) 227 - 230).

Dem obengesagten ist entnehmbar, daß es allgemein relativ schwierig ist, größere Silizidmengen in praxisgerechter Weise in einem Cu-Zn-Al-Werkstoff unterzubringen. Darüberhinaus ist es aber auch nicht möglich, beliebige Methoden anzuwenden, welche zu einer Verfeinerung und Vergleichmäßigung der Silizidausscheidungen geeignet erscheinen. Überraschenderweise wurde nämlich festgestellt, daß eine Verkleinerung der Silizide bei gleichem Volumenanteil an Siliziden zu einer eindeutigen Verschlechterung der Verschleißbeständigkeit führt.

Es ist also notwendig, bei einer der geforderten erhöhten Verschleißbeständigkeit angemessenen Silizidmenge sicherzustellen, daß die Silizide neben einer homogenen Verteilung auch eine bestimmte mittlere Größe innerhalb eines vorgegebenen Größenbereiches aufweisen.

Dies ist erfindungsgemäß durch ganz bestimmte Gehalte an Chrom und/ oder Zirkon bei der eingangs beschriebenen Messinglegierung möglich. Die Chromgehalte bewegen sich dabei in Abhängigkeit einerseits vom Siliziumgehalt, andererseits aber auch in geringen Ausmaß von den übrigen Legierungskomponenten im Bereich zwischen 0,01 und 0,15 Gew.-%, vorzugsweise zwischen 0,05 und 0,1 Gew.-%.

Geringere Gehalte an Chrom und/oder Zirkon bleiben ohne Wirkung auf die Silizidausscheidung, höhere Gehalte führen zu ungünstig feinen Silizidausscheidungen, welche die Verschleißbeständigkeit erheblich verringern. Dabei können sich Chrom und Zirkon jeweils ersetzen und lassen sich auch additiv anwenden. Die zuzugebende Menge an Chrom, bzw. Zirkon muß jeweils in Abhängigkeit von allen Komponenten der Legierung ermittelt werden. So hat sich z. B. überraschenderweise herausgestellt, daß bei höheren Aluminiumgehalten auch die Zugabe an Chrom, bzw. Zirkon erhöht werden muß, um eine gleiche Form der Silizidausscheidungen zu erreichen. Bei zu hohen Zugaben an Chrom, bzw. Zirkon treten neben zu feinen Silizidausscheidungen auch grobe Zusammenballungen dieser Ausscheidungen auf, wodurch eine derartige Messinglegierung ebenfalls weitgehend unbrauchbar wird.

Bei der erfindungsgemäßen Messinglegierung ergibt sich somit eine überraschend selektive Methode, die Form und Verteilung der Silizidausscheidungen im Hinblick auf Verschleißbeständigkeit und Bruchfestigkeit eines entsprechenden Werkstoffes zu steuern.

# 0 175 872

Weitere Vorteile und vorteilhafte Ausgestaltungen der Erfindung ergeben sich aus der folgenden Beschreibung. Anhand der Zeichnung wird näher auf das Gefüge des erfindungsgemäßen Werkstoffes eingegangen. Die Zeichnung zeigt im Einzelnen in

Fig. 1 und 2 Gefügebilder eines Cu-Zn-Al-Werkstoffes ohne und mit Chromgehalt,

Fig. 3 und 4 Gefügebilder eines weiteren Cu-Zn-Al-Werkstoffes ohne und mit Chromgehalt,

Fig. 5 bis 7 Gefügebilder von im wesentlichen identisch zusammengesetzten Cu-Zn-Al-Werkstoffen mit unterschiedlichen Chrom-Gehalten.

Für die im Folgenden verwendeten Begriffe Legierung, Werkstoff und Halbzeug, bzw. Halbfabrikate sollen die folgenden Sinngehalte gelten:

Legierung - betrifft ganz allgemein die chemische Zusammensetzung;

Werkstoff -"fertige Legierung", beinhaltet chemische Zusammensetzung und Gefüge;

Halbzeug, bzw. Halbfabrikat - betrifft einen Werkstoff, welcher bereits eine bestimmte äußere Form aufweist und bis zum Endprodukt noch weiterer Bearbeitung bedarf.

Die erfindungsgemäße Legierung ist aus folgenden Komponenten zusammengesetzt (alle Angaben zur Zusammensetzung im Folgenden in Gew.-%):

|  | | | |
|---|---|---|---|
| 10 | bis | 35 | % Zink, |
| 4 | bis | 12 | % Mangan, |
| 2 | bis | 7 | % Aluminium, |
| 1,1 | bis | 4 | % Silizium, |
| 0,01 | bis | 0,15 | % Chrom und/oder Zirkon, |
| wahlweise | bis zu | 2 | % Blei |
| , | bis zu | 2 | % Nickel, |
|  | bis zu | 1 | % übliche Verunreinigungen, |
|  |  | Rest | Kupfer. |

Dabei ist der Gehalt an Mangan an den jeweiligen Siliziumgehalt gekoppelt, indem vorgegeben wird, daß das Silizium im Wesentlichen in Form von Mangansilizid abgebunden ist.

Bei den Verunreinigungen ist weiterhin vorgegeben, daß der Gesamtanteil an Eisen-Verunreinigungen 0,7 % nicht überschreiten darf.

Bei einem Werkstoff mit dieser Legierungszusammensetzung bilden Kupfer, Zink und Aluminium das Grundgefüge. Die jeweiligen Bereichsgrenzen für diese Komponenten sind im Wesentlichen durch die üblichen Anforderungen bezüglich Härte und Verarbeitbarkeit des Werkstoffes vorgegeben. Dabei soll sich für diesen Werkstoff ein β-Gefüge, bzw. ein β + α -Gefüge einstellen. γ -Gefügeanteile sind nach Möglichkeit zu vermeiden.

Die Untergrenzen und Obergrenzen für Mangan- und Silizium-Anteile sind miteinander gekoppelt, d.h. 1,1 % Silizium, bzw. 4 % Silizium benötigen bei der erfindungsgemäßen Legierungszusammensetzung etwa 4 % Mangan, bzw. 12 % Mangan, um vollständig als Silizide abgebunden werden zu können. Die Untergrenzen ergeben sich weiterhin aus der für die Verschleißeigenschaften notwendigen Mindestmengen an Siliziden von etwa 5 %. Die Obergrenzen von 12 % Mangan, bzw. 4 % Silizium ergeben sich durch die maximal in das Grundgefüge sinnvoll einbringbare Silizidmenge von etwa 16 %. Darüberhinaus ergeben sich ungleichmäßige Silizidausscheidungen, welche die Verschleißeigenschaften negativ beeinflussen. Vorzugsweise werden Siliziumgehalte zwischen 2 und 3 % in Verbindung mit Mangangehalten über 6 % verwendet, da sich in diesem Bereich für die bevorzugte Verwendung der Legierung für Synchronringe die ausgeglichensten Werkstoffeigenschaften ergeben.

Chrom, bzw. Zirkon werden im Bereich zwischen 0,01 % und 0,15 % zugegeben und beeinflussen die Silizidausscheidung. Dabei ergeben sich unterhalb etwa 0,01 Chrom,- bzw. Zirkongehalt keine wesentlichen Einflüsse mehr auf die Silizidausscheidung, während bei Anteilen oberhalb etwa 0,15 % die Silizidausscheidungen zu fein werden und zusätzlich grobe Zusammenballungen bilden können. Chrom, bzw. Zirkon können wahlweise oder auch additiv verwendet werden. Die jeweils zuzugebende Menge an Chrom und/oder Zirkon ist von der Siliziummenge und der gewünschten Form der Silizidausscheidungen, sowie in geringerem Ausmaß auch von den Anteilen der übrigen Komponenten, insbesondere vom Aluminiumgehalt abhängig, und zwar derart, daß mit steigender Siliziummenge, Verfeinerung der Silizidausscheidungen und steigendem Aluminiumanteil ein erhöhter Chromgehalt notwendig ist. Vorzugsweise liegen die Chrom-Gehalte zwischen 0,05 und 0,1 %, da sich damit die für die bevorzugte Verwendung für Synchronringe ausgeglichensten Werkstoffeigenschaften ergeben.

Der Mechanismus der Beeinflussung der Silizidausscheidungen durch Chrom, bzw. Zirkon funktioniert nach den bisherigen Erkenntnissen auf folgende Weise: Wie bekannt ist, bilden sich Mangansilizide aufgrund ihrer hohen Temperaturbeständigkeit bei der Abkühlung aus der Schmelze bereits vor dem Erstarren des Grundgefüges aus Cu-Zn-Al. Chrom, bzw. Zirkon oder aber deren Verbindungen wirken für die Silizidausbildung als Keimbildner. Je nach Anzahl der vorhandenen Keimbildner, also abhängig vom Chrom-, bzw. Zirkon-Gehalt, werden dann eine entsprechende Anzahl Silizidausscheidungen gebildet, die durch den begrenzten Gehalt der Legierung an Mangan und Silizium nur eine bestimmte mittlere Korngröße erreichen können.

Insbesondere wird durch die Chrom, bzw. Zirkonzugabe überraschenderweise auch eine eutektische

4

Feinausscheidung der Silizide unterdrückt, welche beim Stand der Technik einen großen Teil der insgesamt vorhandenen Silizidmenge ausmacht, ohne aber einen entsprechenden großen Beitrag zum Verschleißverhalten zu leisten.

Weitere mögliche Zugabestoffe zur erfindungsgemäßen Legierung sind Blei und Nickel :

Die Wahlkomponente Blei ist bis zu einem Gehalt von etwa 2 % zugebbar, und verbessert insbesondere das Werkstoffverhalten bei spanerzeugender Bearbeitung.

Die Wahlkomponente Nickel ist ebenfalls bis zu einem Gehalt von etws 2 % zugebbar und wirkt vorzugsweise als Diffusionsbremse. Nickel wird daher nur zugegeben, wenn für den Werkstoff längerandauernde Wärmebehandlungen vorgesehen sind, bei welchen sich das Gefüge durch Diffusion möglichst nicht in unerwünschter Weise verändern soll.

Die Legierung ist bezüglich ihrer Gefügeausbildung relativ tolerant gegenüber den bei der Messingherstellung anfallenden üblichen Verunreinigungen. Es sind daher Anteile an üblichen Verunreinigungen bis zu 1 % zulässig. Dies betrifft allerdings nicht Eisen-Verunreinigungen. Eisen-Anteile an diesen Verunreinigungen sind nur bis maximal 0,7 % zulässig. Eisen-Anteile oberhalb dieser Grenze, insbesondere oberhalb 1 % erschweren das Einschmelzen und beeinflussen die Homogenität der Mangansilizidausscheidungen. Dadurch werden die technischen Eigenschaften des Werkstoffes verschlechtert.

Das Herstellungsverfahren für einen Werkstoff, bzw. für ein Halbzeug mit der im vorherigen beschriebenen Legierungszusammensetzung ist sehr einfach, da die für die hohe Verschleißbeständigkeit maßgeblichen Silizide bereits als Primärausscheidung entstehen.

Bei dem erfindungsgemäßen Herstellungsverfahren wird die in üblicher Weise erschmolzene Legierung bei Temperaturen oberhalb etwa 1000°C gegossen oder vorzugsweise stranggegossen und mit beliebiger Abkühlgeschwindigkeit auf Temperaturen unterhalb 400°C abgekühlt. Dieser abgekühlte Werkstoff, bzw. das bereits durch das Strangpressen geformte Halbzeug weist ein Grundgefüge auf, welches abhängig von den Anteilen an Kupfer, Zink und Aluminium, sowie von der Abkühlungsgeschwindigkeit, aus einem reinen $\beta$-Mischkristallgefüge und mit steigenden Kupfer-Äquivalent (theoretischer Kupfer-Gehalt) und sinkender Abkühlgeschwindigkeit aus einem $\beta + \alpha$ -Mischkristallgefüge besteht, wobei $\beta$-Anteil in der Regel überwiegt.

In dieses $\beta$-, bzw. $\beta + \alpha$ -Grundgefüge sind, vorzugsweise innerhalb der Körner, die Primärausscheidungen aus im wesentlichen Mangansilizid eingelagert. Diese Mangansilizide sind äußerst homogen verteilt und von einer relativ einheitlichen Größe aufgrund des im Vorstehenden bereits beschriebenen Chrom-/Zirkon-Keimbildungsmechanismus. Die Mangansilizide liegen bei diesem Werkstoff in der üblichen nadeligen Gestalt vor, wobei vorzugsweise der Durchmesser der Nadeln in der Größenordnung bis etwa 5 µm, die Länge bis etwa 30 µm beträgt.

Der gegossene und vorzugsweise abgekühlte Werkstoff kann weiteren Warmumformschritten im Temperaturbereich zwischen 550° und 800°C vorzugsweise zwischen 620° und 720°C unterworfen werden. Als erster Warmumformschritt kann dabei vorzugsweise Strangpressen angewendet werden und danach wahlweise z. B. Gesenkschmieden.

Weiterhin ist es möglich, im Anschluß an die einzelnen Formgebungsschritte Wärmebehandlungsschritte im Temperaturbereich zwischen 200° und 500°C durchzuführen. Diese Wärmebehandlungsschritte dienen zur Entspannung oder Aushärtung des Gefüges, bzw. zur Einstellung bestimmter Gefügeverhältnisse, wie z. B. Vergrößerung des $\alpha$ -Anteils im $\beta + \alpha$ -Mischkristallgefüge. Die Erwärmungsdauern liegen dabei im Bereich zwischen wenigen Sekunden (z. B. induktives Erhitzen vor den Gesenkschmieden) und etwa 24 Stunden (z. B. Entspannungsglühen bei niedrigen Temperaturen).

Dabei bewirken sowohl die Warmumformschritte als auch die Wärmebehandlungsschritte im Wesentlichen nur Veränderungen des Cu-Zn-Al-Grundgefüges. Die als Primärausscheidungen vorliegenden Mangansilizide werden dagegen praktisch nicht beeinflußt.

Derartige Messingwerkstoffe, bzw. -legierungen können aufgrund der beschriebenen Silizidausscheidungen in vorteilhafter Weise für Halbzeuge und Halbfabrikate Verwendung finden, welche neben guter Bearbeitbarkeit einen hohen Verschleißwiderstand aufweisen müssen. Vorzugsweise werden Synchronringe für Kraftfahrzeuggetriebe aus diesem Material gefertigt.

**0 175 872**

## Ausführungs- und Vergleichsbeispiele:

**Tabelle I**: Zusammensetzungen in Gew.-%

| Legierungsnummer | 1 | 2 | 3 | 4 | 5 | 6 | 7 | CuZn40Al 2 |
|---|---|---|---|---|---|---|---|---|
| Legierungs-bestandteil | | | | | | | | |
| CU | 59,4 | 59,4 | 60,6 | 60,6 | 68,5 | 68,5 | 68,5 | 58,5 |
| Zn | 26,6 | 26,6 | 27,5 | 27,5 | 14,3 | 14,3 | 14,3 | 35,9 |
| Mn | 8,0 | 8,0 | 6,4 | 6,4 | 7,65 | 7,50 | 7,30 | 2,0 |
| Al | 2,5 | 2,5 | 2,5 | 2,5 | 6,0 | 6,0 | 6,0 | 1,6 |
| Si | 2,25 | 2,25 | 1,75 | 1,75 | 2,5 | 2,5 | 2,5 | 0,8 |
| Cr | -- | 0,05 | -- | 0,05 | 0,10 | 0,20 | 0,40 | -- |
| Pb | 0,5 | 0,5 | 0,5 | 0,5 | 0,5 | 0,5 | 0,5 | 0,4 |

Verunreinigungen nur Fe analysiert, Rest überwiegend aus Ni und Sn bestehend

| Fe | 0,5 | 0,5 | 0,5 | 0,5 | 0,3 | 0,3 | 0,3 | 0,5 |
|---|---|---|---|---|---|---|---|---|

In der voranstehenden Tabelle I sind die Zusammensetzungen verschiedener Legierungen wiedergegeben, auf deren Gefüge bzw. Verschleißeigenschaften im Folgenden näher eingegangen werden soll.

Die Zusammensetzung der Legierungen 1 und 2, bzw. 3 und 4 sind jeweils identisch bis auf den Chrom-Gehalt, wobei die Legierungen 1 und 3 jeweils keinen Chrom-Anteil, die Legierungen 2 und 4 jeweils einen Chrom-Anteil von 0,05 % aufweisen.

Die Zusammensetzung der Legierungen 5 bis 7 ist im Wesentlichen identisch (nur der Mangan-Gehalt variiert etwas) bis auf den Chrom-Gehalt, welcher bei Legierung 5 gleich 0,10 %, bei 6 gleich 0,20 % und bei 7 gleich 0,40 % ist.

Die Legierung CuZn40Al 2 stellt eine Standard-Synchronringlegierung dar, die bei dem später beschriebenen Verschleißvergleich als Referenz dient.

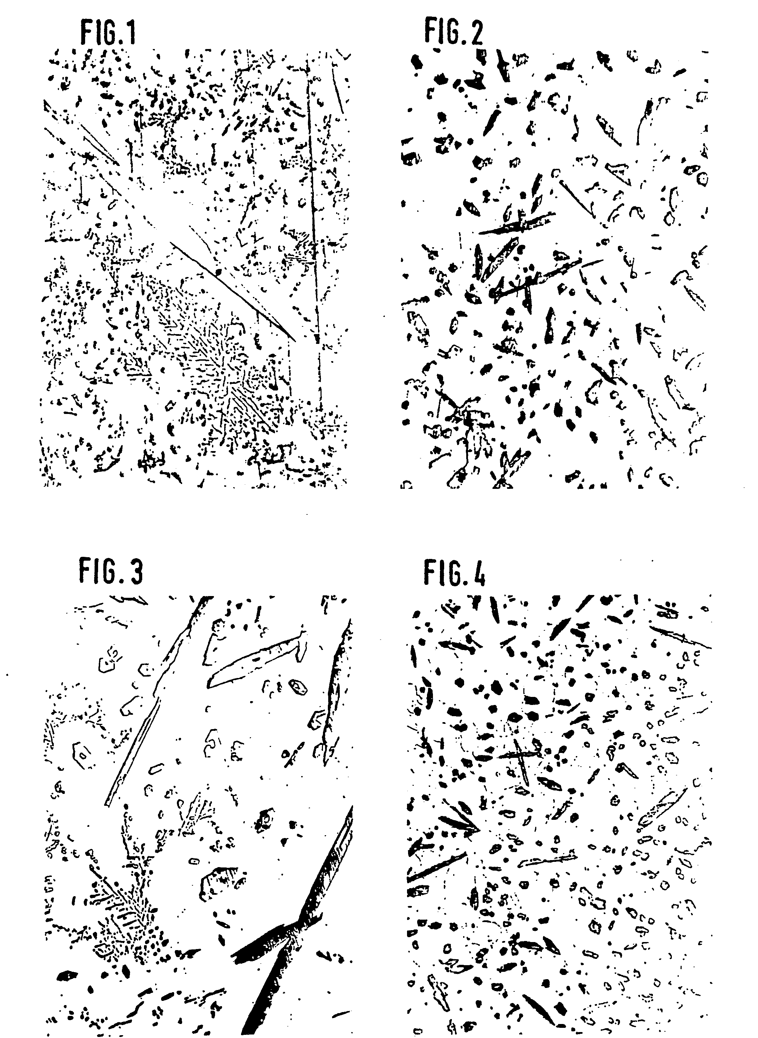

Alle in der Tabelle I genannten Legierungen wurden in einem Tiegelofen geschmolzen und bei Anfangstemperaturen oberhalb 1000°C im Strangguß mit 220 mm Durchmesser vergossen. Nach dem Abkühlen mit mittlerer Abkühlungsgeschwindigkeit wurden Gefügeproben entnommen, die in üblicher Weise präpariert wurden. In den Figuren 1 bis 7 (die Figurennummern sind identisch mit den Legierungsnummern) sind typische Gefügebilder dieser Werkstoffe bei 200-facher Vergrößerung wiedergegeben.

Die mit den Fig. 1 und 3 dargestellten Gefüge weisen äußerst inhomogene Mangansilizidausscheidungen (im Bild dunkel wiedergegeben) auf. Insbesondere sind auch die bereits im Zusammenhang mit dem Stand der Technik angesprochenen eutektischen Silizidausscheidungen erkennbar (Fig. 1: untere Bildhälfte, Mitte; Fig. 3: unten links). Bei den Gefügen nach den Fig. 2 und 4 ist die positive Auswirkung der Chrom-Zugaben von 0,05 % auf die Homogenität der Mangansilizidausscheidungen ohne weiteres erkennbar: Die Silizide sind wesentlich gleichmäßiger verteilt und weisen sehr ähnliche Abmessungen auf (im Schnittbild liegen die willkürlich orientierten, nadeligen Mangansilizidausscheidungen nur zu einem geringen Teil exakt in der Schnittebene, so daß nur ihre querschnitte sichtbar sind). Die weiterhin in den Figuren 1 bis 4 teilweise erkennbaren feinen Linien im hellen Hintergrund stellen die Korngrenzen des Grundgefüges dar. Insbesondere sind keine eutektischen Silizidausscheidungen erkennbar.

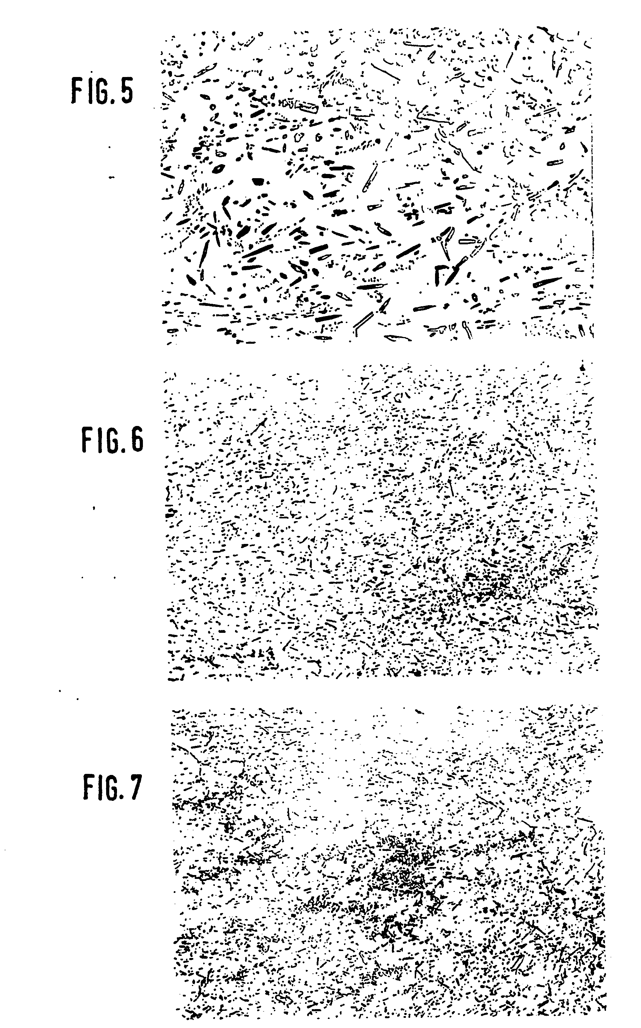

Die Figuren 5 bis 7 zeigen die Auswirkungen von zu hohen Chrom-Zugaben auf die - dunkel wiedergegebenen - Mangansilizidausscheidungen (Fig. 6 und 7) im Vergleich zum Gefüge des erfindungsgemäßen Werkstoffes (Fig. 5)

Bei Fig. 5 ist bereits erkennbar, daß die Silizidnadeln kleiner ausfallen, als bei dem Gefüge nach Fig. 4. Dies ergibt sich durch den doppelt so hohen Chrom-Anteil (Fig. 4: 0,05 %, Fig. 5: 0,10 %) bei nur geringfügig gesteigertem Silizium-Gehalt (Fig. 4: 2,25 %; Fig.5:2,5 %).

In Fig. 6 ist ein Gefüge gezeigt, welches bei einem wiederum verdoppelten Chrom-Gehalt von 0,20 % entsteht, wobei die anderen Komponenten mit der für Fig. 5 verwendeten Legierungszusammensetzung annähernd identisch sind. Die Mangansilizidausscheidungen sind hier bereits extrem fein und führen bei einem derartig ausgebildeten Werkstoff zu einem deutlich verschlechterten Verschleißverhalten. Zusätzlich deutet sich bei diesen Gefüge bereits eine Ungleichmäßigkeit in der Verteilung der Silizide an (Fig. 6, rechts unten).

Diese Ungleichmäßigkeiten werden bei dem Gefüge nach Fig. 7 noch deutlicher, wobei hier gegenüber Fig. 6 der Chromgehalt bei ansonsten nahezu identischer Zusammensetzung nochmals verdoppelt wurde (0,40 %). Bei dem Gefüge nach Fig. 6 sind neben den zu feinen Mangansilizidausscheidungen deutlich grobe Silizid-Zusammenballungen erkennbar, die zur Unbrauchbarkeit eines derartigen Werkstoffes für die angestrebte Verwendung führen.

Aus dem Werkstoff mit der Legierungsnummer 2 sowie dem Werkstoff CuZn40Al 2, welcher als Standardreferenz dient, wurde nach dem folgenden bevorzugten Verfahren Synchronringe hergestellt. Die stranggegossenen Werkstoffe wurden bei 650°C auf Rohre mit ca. 85 x 70 mm Durchmesser stranggepreßt.

6

Anschließend wurden die Rohre abgekühlt und zerschnitten. Die Rohrstücke wurden induktiv auf 650 C erwärmt und durch Gesenkschmieden in Synchronringform gebracht. Danach wurden die Synchronringe bei 250 C für zehn Stunden zum Härten ausgelagert. Aus diesen Halbfabrikat wurden dann Verschleißproben entnommen und eine Verschleißmessung nach dem System Reichert, welches später erläutert wird, durchgeführt. Die Ergebnisse sind in Tabelle II wiedergegeben:

**Tabelle II**: Verschleißbeständigkeit

|  | Legierung Nr. 2 | CuZn40Al 2 |
|---|---|---|
| Verschleißbeständigkeit in km/g | 1600 - 3100 | 150 - 200 |
| Härte HB 2,5/62,5 | 180 | 170 |
| Anteil an α -Phase in Vol.-% | 25 | 25 |

Neben der Verschleißbeständigkeit, welche in Kilometer pro Gramm an Materialverlust angegeben ist, ist der Tabelle II auch noch die Härte der Prüflinge, sowie deren Gefügeanteil an α -Phase entnehmbar.

Wie zu erkennen ist, sind die Härtewerte der beiden Prüflinge fast gleich, der Anteil an -Phase ist sogar genau gleich. Diese beiden Größen werden im Wesentlichen vom Grundgefüge bestimmt, welches offenbar hinsichtlich seiner technischen Eigenschaften sehr ähnlich ist.

Die Verschleißbeständigkeit der Prüflinge, welche im Wesentlichen auf die Silizidausscheidungen zurückzuführen ist, ist dagegen sehr unterschiedlich. Insgesamt ist der Verschleiß bei dem Prüfling aus Legierung Nr. 2 um mehr als eine Größenordnung geringer als bei dem Prüfling aus Referenzmaterial.

Zur Ermittlung der Verschleißbeständigkeitswerte wurde eine an den speziellen Zweck angepaßte Reibverschleißwaage System Reichert verwendet. Der Prüfling bestand aus einem runden Stift, mit 2,7 mm Durchmesser, dessen Lauffläche plangedreht wurde, und so aus dem Synchronring entnommen wurde, daß seine Lauffläche aus dem Bereich des Reibgewindes stammte. Als Gegenkörper wurde ein geschliffener Nadellagerring aus 100 Cr 6 mit einem Außendurchmesser von 35 mm, einer Härte 58-65 HRC und einer Laufflächenrauhigkeit von etwa 2 μm verwendet. Das Schmiermittel bestand aus 75 Vol.-% Getriebeöl SQ M2C - 9oo8 A und 25 Vol.-% Shell Fususoil Io bei einer Eintauchtiefe des nadellagerringes von 10 mm.

Verwendete Versuchparametern:
Belastung des Prüflings 300 N entspricht 52 N/mm$^2$;
Umlaufgeschwindigkeit des Ringes 100 U/min entspricht einer Gleitgeschwindigkeit von etwa 1,8 m./sec;
Schmiermitteltemperatur ca 100 C;
Laufdauer 2500 m.

Als Verschleißbetrag wird der Gewichtsverlust des Prüflings betrachtet wobei der am Prüfling entstehende Grat vor der Gewichtsverlustbestimmung entfernt wird. Der in Tabelle II angegebene Verschleißwiderstand ist das Verhältnis aus Laufstrecke in Kilometer und Gewichtsverlust in Gramm.

## Patentansprüche

1. Messinglegierung,
gekennzeichnet durch folgende Zusammensetzung (in Gew.-%):

| 10 | bis | 35 | % Zink, |
|---|---|---|---|
| 4 | bis | 12 | % Mangan, |
| 2 | bis | 7 | % Aluminium, |
| 1,1 | bis | 4 | % Silizium, |
| 0,01 | bis | 0,15 | % Chrom und-/oder Zirkon, |

mit der Maßgabe, daß das Silizium im wesentlichen in Form von Mangansilizid abgebunden ist, sowie wahlweise

| | bis zu | 2 | % Blei, |
|---|---|---|---|
| | bis zu | 2 | % Nickel, |
| | bis zu | 1 | % übliche Verunreinigungen, |
| wobei der Anteil an Eisenverunreinigungen | | 0,7 | %; nicht übersteigen darf, |
| Rest | | | Kupfer. |

2. Messinglegierung nach Anspruch 1, dadurch gekennzeichnet, daß der Silizium-Anteil zwischen 1,5 und 3 % beträgt.

3. Messinglegierung nach Anspruch 1 oder 2, dadurch gekennzeichnet, daß der Chrom- und/oder Zirkon-Anteil zwischen 0,05 und 0,1 % beträgt.

4. Messinglegierung nach einem der Ansprüche 1 bis 3, dadurch gekennzeichnet, daß der Mangan-Anteil mindestens 6 % beträgt.

5. Messinglegierung nach einem der Ansprüche 1 bis 4, dadurch gekennzeichnet, daß der Gehalt an Mangansiliziden höher als 5 % ist.

6. Verfahren zur Herstellung eines Messingwerkstoffes oder eines Halbzeuges aus einer Messinglegierung nach einem der Ansprüche 1 bis 5, dadurch gekennzeichnet, daß die auf übliche Weise erschmolzene Legierung bei Temperaturen oberhalb 1000°C gegossen, vorzugsweise stranggegossen wird, und daß die gegossene Legierung mit beliebiger Abkühlungsgeschwindigkeit auf Temperaturen unterhalb 400 C abgekühlt wird, wonach der abgekühlte Werkstoff aus einem β bzw. β + α -Mischkristallgefüge besteht, in welches, vorzugsweise innerhalb der Körner, Primärausscheidungen aus im wesentlichen Mangansiliziden eingelagert sind.

7. Verfahren nach Anspruch 6, dadurch gekennzeichnet, daß der gegossene Werkstoff bei einer Temperatur von 550° bis 800°C. warmumgeformt wird.

8. Verfahren nach Anspruch 7, dadurch gekennzeichnet, daß der Werkstoff bei einer Temperatur von 620 - 720°C warm umgeformt wird.

9. Verfahren nach einem der Ansprüche 6-8, dadurch gekennzeichnet, daß der Werkstoff stranggepreßt wird.

10. Verfahren nach einem der Ansprüche 7-9, dadurch gekennzeichnet, daß nach dem ersten Warmumformen ein weiterer Warmumformschritt, in den Temperaturbereichen nach den Ansprüchen 7 und 8 durchgeführt wird.

11. Verfahren nach Anspruch 10, dadurch gekennzeichnet, daß der weitere Umformschritt durch Gesenkschmieden erfolgt.

12. Verfahren nach einem der Ansprüche 7 bis 11, dadurch gekennzeichnet, daß im Anschluß an die Formgebungsschnitte jeweils eine Wärmebehandlung im Temperaturbereich zwischen 200° und 500°C mit einer Dauer bis zu etwa 24 Stunden zur Entspannung oder Aushärtung des Gefüges, bzw. zur Einstellung bestimmter Gefügeverhältnisse durchgeführt wird.

13. Verwendung eines Messingwerkstoffes, bzw. einer Messinglegierung nach einem der Ansprüche 1 bis 12 für Halbzeuge und Halbfabrikate, die neben guter Bearbeitbarkeit einen hohen Verschleißwiderstand aufweisen müssen.

14. Verwendung eines Messingwerkstoffes, bzw. einer Messinglegierung nach einem der Ansprüche 1-11 für Synchronringe.

**Claims**

1. A brass alloy, characterised by the following composition (in % by weight):

10      to   35    % zinc,
4       to   12    % manganese,
2       to   7     % Aluminium,
1.1     to   4     % silicon,
0.01    to   0.15 % chromium and/or zirconium,

with the proviso that the silicon is combined substantially in the form of manganese silicide; as well as optionally
up to 2 % lead,
up to 2 % nickel,
up to 1 % usual impurities in which respect the proportion of iron impurities may not exceed 0.7 %,
and the remainder copper.

2. A brass alloy according to Claim 1, characterised in that the proportion of silicon amounts to between 1.5 and 3 %.

3. A brass alloy according to Claim 1 or 2.
characterised in
that the proportion of chromium and/or zirconium amounts to between 0.05 and 0.1 %.

4. A brass alloy according to one of Claims 1 to 3,
characterised in
that the proportion of manganese amounts to at least 6 %.

5. A brass alloy according to one of claims 1 to 4,
characterised in
that the content of silicides is higher than 5 %.

6. A method of producing a brass material or a semi-finished product made of a brass alloy according to one of claims 1 to 5,
characterised in
that the alloy, melted in the usual way, is cast, preferably continuously-cast, at temperatures above 1000 C and
that the cast alloy is cooled at such a rate to a temperature below 400° C that the cooled material then consists of a β or respectively β + α mixed crystal structure, in which, preferably within the grains, primary precipitations consisting substantially of manganese silicides are embedded.

7. A method according to Claim 6, characterised in that the cast material is hot-worked at a temperature in the range of 550° to 800° C.

8. A method according to Claim 7, characterised in that the material is hot-worked at a temperature of 620 - 720° C.

9. A method according to one of claims 6-8, characterised in that the material is extruded.

10. A method according to one of Claims 7-9, characterised in that after the first hot-working a further hot-working step, in the temperature ranges according to Claims 7 and 8, is carried out.

11. A method according to Claim 10, characterised in that the further hot-working step is effected by drop-forging.

12. A method according to one of Claims 7 to 11,
characterised in
that following on the shaping operations in each instance a further heat treatment is carried out in the temperature range between 200° C and 500° C with a duration of up to about 24 hours for the stress-relieving of tempering of the structure, or alternatively for obtaining a specific structural state.

13. Use of a brass material, or respectively of a brass alloy according to one of claims 1 to 12 for semi finished products and components which, besides good machinability have to have high wear resistance.

14. Use of a brass material, or respectively of a brass alloy according to one of claims 1-11 for synchro-rings.

**Revendications**

1. Alliage de laiton, caractérisé par la composition suivante (en % en poids)

| | | | |
|---|---|---|---|
| 10 | à | 35 | % de zinc |
| 4 | à | 12 | % de manganèse |
| 2 | à | 7 | % d'aluminium |
| 1,1 | à | 4 | % de silicium |
| 0,01 à | | 0,15 | % de chrome et/au zirconium, |

dans la mesure où le silicium soit essentiellement lié sous la forme de siliciure de manganèse, ansi qu'optionnellement,

jusqu'à 2 % de plomb
jusqu'à 2 % de nickel
jusqu'à 1 % d'impuretés courantes,

la proportion d'impuretés de fer ne devant pas dépasser 0,7 %,
le reste étant du cuivre.

2. Alliage de laiton selon la revendication 1, caractérisé en ce que la proportion de silicium est comprise entre 1, 5 et 3 %.

3. Alliage de laiton selon la revendication 1 au 2, caractérisé en ce que la proportion de chrome et/ou de zirconium est comprise entre 0,05 et 0, 1 %.

4. Alliage de laiton selon l'une des revendications 1 à 3, caractérisé en ce que la proportion de manganèse est d'au moins 6 %.

5. Alliage de laiton selon l'une des revendications 1 à 4, caractérisé en ce que la teneur en siliciures de manganèse est supérieure à 5 %.

6. Procédé de préparation d'une matière à base de laiton au d'un produit semi-fini constitué par un alliage de laiton selon l'une des revendications 1 à 5, caractérisé en ce que l'on coule l'alliage fondu de façon usuelle à

des températures supérieures à 1 000°C, de préférence par coulée continue, et l'on refroidit l'alliage coulé à une vitesse de refroidissement quelconque à des températures inférieures à 400°C, après quoi la matière refroidie comprend une structure cristalline mixte $\beta$ ou $\beta + \alpha$, dans laquelle sont incorporées, de préférence à l'intérieur des grains, des précipitations primaires constituées essentiellement par des siliciures de manganèse.

7. Procédé selon la revendication 6, caractérisé en ce que l'on façonne à chaud la matière coulée à une température de 550°C à 800°C.

8. Procédé selon la revendication 7, caractérisé en ce que l'on façonne à chaud la matière à température de 600 à 720°C.

9. Procédé selon l'une des revendications 6 à 8, caractérisé en ce qu'on extrude la matière.

10. Procédé selon l'une des revendications 7 à 9, caractérisé en ce qu'après le premier façonnage à chaud, on effectue un autre stade de façonnage à chaud dans les intervalles de températures selon les revendications 7 et 8.

11. Procédé selon la revendication 10, caractérisé en ce que le stade de façonnage ultérieur a lieu par matriçage.

12. Procédé selon l'une des revendications 7 à 11, caractérisé en ce qu' à la suite des stades de façonnage, on effectue dans chaque cas un traitement thermique (pour détendre ou durcir la structure ou pour établir des conditions de structure déterminées) dans l'intervalle de températures compris entre 200 et 500°C, avec une durée pouvant atteindre environ 24 heures.

13. Utilisation d'une matière à base de laiton ou d'un alliage de laiton selon l'une des revendications 1 à 12 pour des produits semi-finis et des demi-produits, qui doivent présenter, en plus d'une bonne usinabilité, une résistance à l'usure élevée.

14. Utilisation d'une matière à base de laiton ou d'un alliage de laiton selon l'une des revendications 1 à 11 pour des anneaux de synchronisation.

**FIG.1**

**FIG.2**

**FIG.3**

**FIG.4**

FIG. 5

FIG. 6

FIG. 7